# FASCICULE DE BREVET EUROPEEN

(11) **EP 1 306 560 B1**
(45) Date de publication et mention de la délivrance du brevet: **20.08.2008**
(21) Numéro de dépôt: 02292595.2
(22) Date de dépôt: 21.10.2002
(51) Int. Cl.: F15B 15/18

(54) **Actionneur électrohydraulique autonome**
Elektrohydraulischer Stellantrieb
Autonomous electro-hydraulic acuator

(30) Priorité: 24.10.2001 FR 0113716
(43) Date de publication de la demande: 02.05.2003
(73) Titulaire: SNECMA, 75015 Paris (FR)
(72) Inventeur: Franchet, Michel, 77240 Pouilly-le-Fort (FR); Kettler, Daniel, 77590 Chartrettes (FR); Lejeune, Pascal, 77210 Avon (FR)
(74) Mandataire: David, Alain

(56) Documents cités:
- CH-A- 386 854
- DE-B- 1 175 057
- DE-B- 1 273 948
- US-A- 2 737 895
- US-A- 3 534 551
- US-A- 4 529 362
- US-A- 4 850 812

## Description

### Domaine de l'invention

La présente invention se rapporte à un actionneur électrohydraulique particulièrement adapté à un usage aéronautique. Il trouve ainsi application dans les aéronefs pour la commande de gouvernes de vol ou d'aubes de soufflante à calage variable par exemple.

### Art antérieur

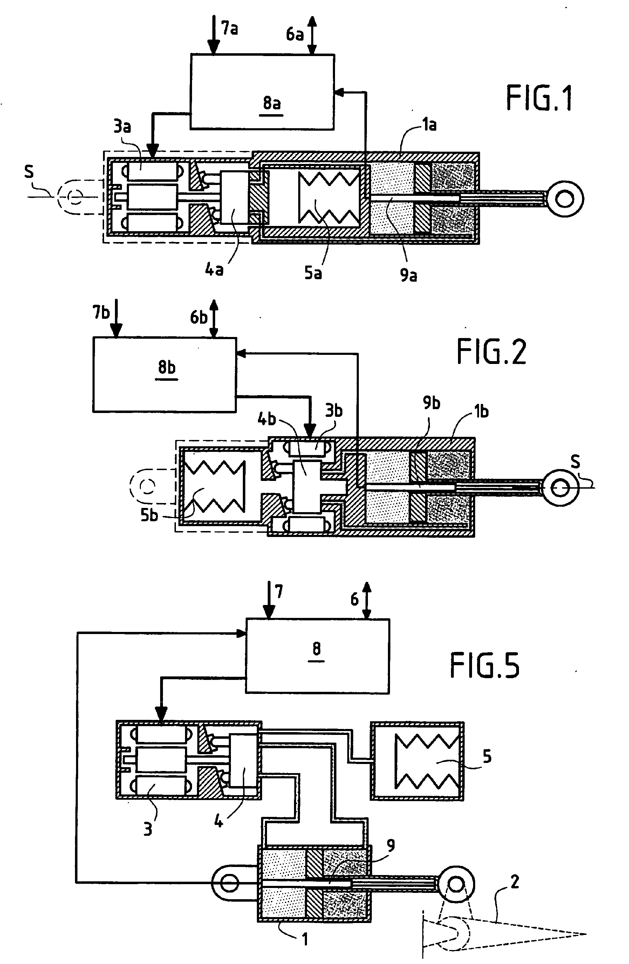

Les actionneurs électrohydrauliques (EHA) sont maintenant bien connus. Ils comportent essentiellement, comme l'illustre le schéma fonctionnel de la figure 5, un vérin hydraulique 1 assurant la conduite d'un organe à commander 2 et dont le déplacement est fonction de la vitesse et du sens de rotation d'un moteur électrique 3 commandant l'alimentation en huile de ce vérin depuis une pompe hydraulique 4 qui est immergée dans l'huile. Un accumulateur hydraulique 5 assure la compensation des variations de volume d'huile résultant de la compressibilité ou de la dilatation de l'huile, notamment sous l'effet de la température. Les commandes électriques 6 et la fourniture de la puissance électrique 7 sont délivrés à l'actionneur par l'intermédiaire d'une unité de commande électronique 8 qui agit directement sur le moteur électrique en fonction d'informations sur la position du vérin fournies par un capteur 9.

Structurellement, ces actionneurs sont constitués en plusieurs éléments séparés, rapportés latéralement sur le corps du vérin et raccordés par des canalisations en principe souples mais aussi parfois rigides, à l'exception toutefois de l'ensemble moteur-pompe qui est en général intégré dans un même boîtier. Le brevet US 4,529,362 illustre parfaitement une telle structure avec réservoir hydraulique et vérin extérieurs. Un autre exemple de réalisation d'un tel actionneur électrohydraulique est illustré par le brevet FR 2 489 897 qui montre un ensemble hydraulique relativement compact et réalisé en deux parties adjacentes, l'une intégrant le vérin et son distributeur hydraulique, l'autre regroupant l'ensemble moteur-pompe-accumulateur. Si cette structure mieux intégrée donne globalement satisfaction dans la plupart des applications industrielles, elle présente, dans le cadre d'une utilisation aéronautique exigeant par exemple une mise en rotation de l'ensemble, ou bien un encombrement radial réduit, des inconvénients liés à sa configuration dissymétrique (balourd) génératrice de contraintes vibratoires importantes.

### Objet et définition de l'invention

La présente invention propose de pallier les inconvénients des dispositifs de l'art antérieur avec un actionneur électrohydraulique autonome axisymétrique à encombrement radial réduit. Un but de l'invention est notamment de proposer un actionneur dépourvu de balourds dès lors qu'on exige une mise en rotation de cet actionneur par exemple pour l'adapter à une utilisation aéronautique particulière.

Ces buts sont atteints par un actionneur électrohydraulique comportant un vérin hydraulique ayant un piston solidaire d'un organe à commander et pouvant se déplacer dans un corps cylindrique sous l'action d'un fluide hydraulique ; une pompe hydraulique alimentant en fluide hydraulique les deux faces dudit piston au travers de canaux; un moteur électrique immergé dans le fluide hydraulique, commandé et alimenté en courant par une unité de commande électronique, et entraînant en rotation ladite pompe hydraulique; caractérisé en ce que un accumulateur hydraulique est destiné à compenser les variations de volume du fluide hydraulique ; lesdits canaux sont intégrés dans ledit corps cylindrique du vérin, ledit vérin hydraulique, ladite pompe hydraulique, ledit moteur électrique et ledit accumulateur hydraulique, ont un axe de symétrie commun et sont montés en alignement dans un même boîtier étanche, de façon à former un ensemble hydraulique autonome axisymétrique.

Cet arrangement particulier conduit à une structure d'actionneur très simplifiée, entièrement intégrée et donc particulièrement compacte, et facile à mettre en oeuvre et à remplacer du fait de son autonomie hydraulique. Les risques de fuites sont en outre fortement limitées du fait de l'absence de tuyauteries et de raccords tournants. Surtout, la structure axiale, en ligne, de cet actionneur permet d'éliminer tous les balourds existant dans les dispositifs de l'art antérieur et préjudiciables à un fonctionnement sans vibrations, lors d'une éventuelle mise en rotation de l'actionneur.

De préférence, la pompe hydraulique est une pompe hydraulique à barillet comportant des pistons axiaux et un plateau biais. Le barillet est mobile en rotation autour dudit axe de symétrie commun et ledit plateau biais fixe et solidaire dudit boîtier. Cette configuration à barillet tournant permet d'éviter l'utilisation de clapets anti-retours et donc de réduire à la fois le nombre de pièces, le poids, l'encombrement et le risque de panne de l'actionneur.

De préférence, ledit moteur électrique est du type sans balai, à aimants permanents ou asynchrone.

Selon un mode de réalisation avantageux, ledit barillet de la pompe hydraulique est intégré audit rotor du moteur électrique. Cette configuration d'ensemble moteur-pompe forme ainsi une électropompe intégrée.

De préférence, l'accumulateur hydraulique comporte un soufflet métallique assisté par un ressort. Il peut être disposé axialement sous ledit corps de pompe ou dans ledit corps de vérin. Avantageusement, l'actionneur selon l'invention comporte en outre des moyens d'équilibrage pour supprimer le balourd créé par le plateau biais lors de sa mise en rotation.

### Brève description des dessins

Les caractéristiques et avantages de la présente invention ressortiront mieux de la description suivante, faite à titre indicatif et non limitatif, en regard des dessins annexés sur lesquels :
- la figure 1 est un schéma de principe illustrant la structure fonctionnelle d'un actionneur électrohydraulique dans un premier mode de réalisation de l'invention.
- la figure 2 est un schéma de principe illustrant la structure fonctionnelle d'un actionneur électrohydraulique dans un second mode de réalisation de l'invention,
- la figure 3 illustre un premier exemple de structure matérielle d'un actionneur électrohydraulique selon l'invention,
- la figure 3A est une vue de détail de la figure 3,
- la figure 4 illustre un deuxième exemple de structure matérielle d'un actionneur électrohydraulique selon l'invention, et
- la figure 5 est un schéma illustrant la structure fonctionnelle d'un actionneur électrohydraulique selon l'art antérieur.

### Description détaillée de modes de réalisation préférentiels

Les figures 1 et 2 sont deux schémas de principe d'un actionneur de type électrohydraulique (EHA - Electro-Hydrostatic Actuator) qui, selon l'invention, se présente sous la forme d'un ensemble hydraulique autonome axisymétrique dans lequel le vérin hydraulique 1a et 1b, la pompe hydraulique 4a et 4b, le moteur électrique 3a et 3b, et le l'accumulateur hydraulique 5a et 5b constituant cet actionneur ont un axe de symétrie commun (S) et sont montés en alignement dans un même boîtier étanche vis à vis de l'environnement extérieur et à l'intérieur duquel le fluide hydraulique circule en circuit fermé. Dans le schéma de la figure 1, l'accumulateur est disposé axialement dans le corps du vérin alors que, dans le schéma de la figure 2, il est disposé axialement sous le corps de pompe. Comme dans l'état de l'art, les commandes électriques 6a et 6b et la fourniture de la puissance électrique 7a et 7b sont délivrés à l'actionneur par l'intermédiaire d'une unité externe de commande électronique 8a et 8b qui agit directement sur le moteur électrique en fonction d'informations sur la position du vérin fournies par un capteur 9a et 9b.

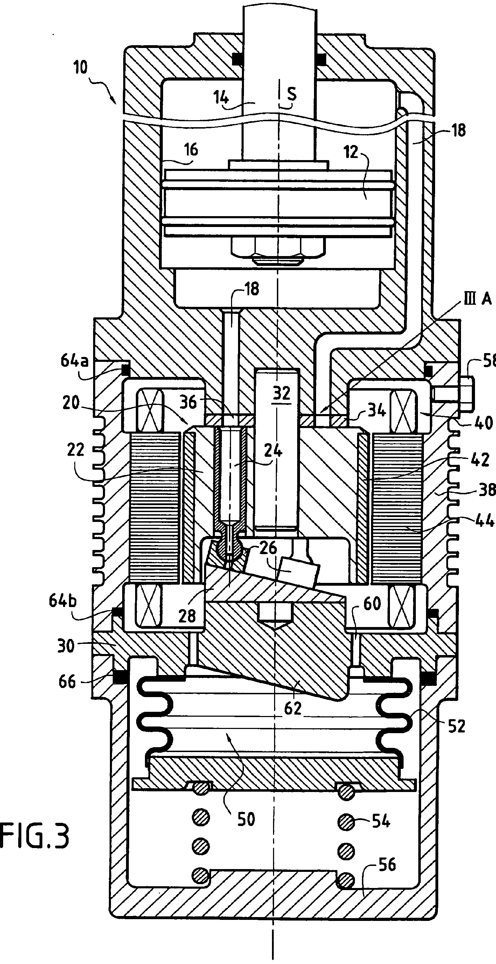

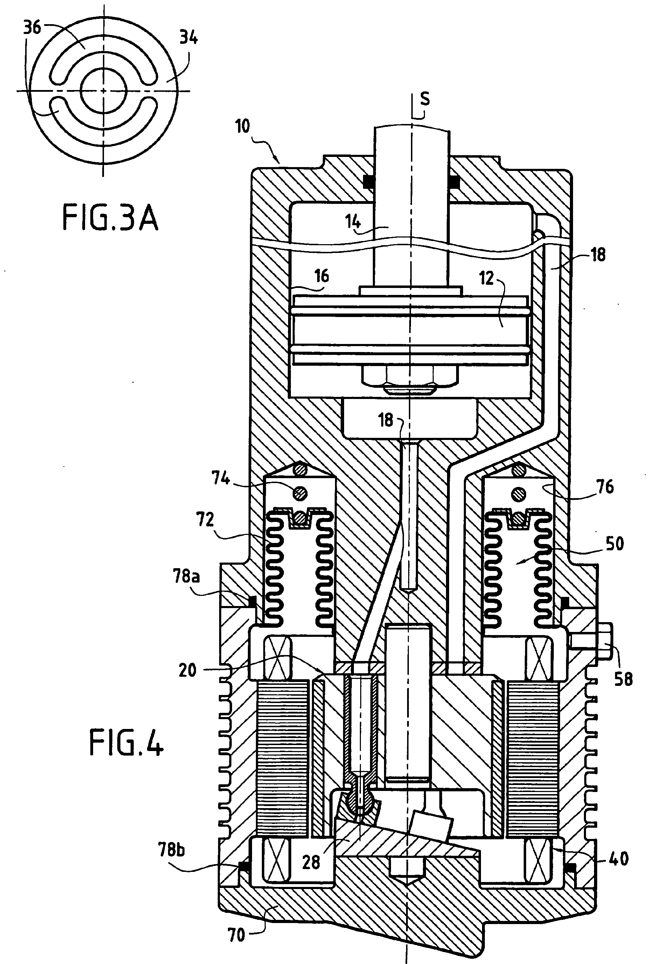

Un premier exemple de réalisation d'un actionneur conforme à l'invention est illustré à la figure 3. L'actionneur comporte un vérin hydraulique 10 ayant un piston 12 dont la tige 14 est solidaire d'un organe à commander (non représenté), par exemple un anneau de commande et de synchronisation des pales d'hélice d'un turbopropulseur, comme l'illustre la demande déposée conjointement avec la présente demande et intitulée « dispositif électrohydraulique de changement de pas d'hélice ». Le piston peut se déplacer selon son axe longitudinal dans un corps cylindrique 16 sous l'action d'un fluide hydraulique délivré par une pompe hydraulique 20 qui alimente en fluide hydraulique les deux faces de ce piston au travers de canaux 18 intégrés directement dans le corps cylindrique du vérin.

La pompe hydraulique bien connue dans le domaine de l'art est de préférence une pompe hydraulique haute pression classique à barillet tournant, comportant des pistons axiaux (tournant avec le barillet) et un plateau biais fixe. Le barillet 22 de forme cylindrique est, comme il est connu, percé d'une pluralité d'alésages débouchants, au moins au nombre de trois, à l'intérieur de chacun desquels est monté un piston creux 24 dont la tête sphérique repose dans un logement de forme complémentaire d'un plot d'appui 26 glissant sur la pente de la surface supérieure du plateau biais fixe 28 qui est serti dans un couvercle de séparation 30. Le barillet 22 en tournant autour de son axe fixe 32 entraîne alors les pistons creux axiaux, qui montent ou descendent en glissant sur la pente du plateau biais fixe, c'est-à-dire aspirent ou refoulent le fluide hydraulique qui circule en circuit fermé dans l'actionneur électrohydraulique sur chaque face du vérin grâce à une glace de distribution fixe 34, munie de haricots 36 d'aspiration et de refoulement et placée entre le barillet 22 et les canaux 18 du vérin.

L'axe 32 du barillet de la pompe est serti en force dans le corps du vérin. Les pistons sont creux pour permettre au fluide hydraulique sous pression de créer une pellicule fluide entre la tête sphérique du piston et le plot d'appui, ainsi qu'une autre pellicule fluide entre le plateau biais et le plot d'appui pour éviter le contact métal-métal et réduire ainsi l'usure. L'enveloppe cylindrique 38 du carter de la pompe est avantageusement pourvue d'ailettes de refroidissement sur sa face externe.

Un moteur électrique 40 immergé dans le fluide hydraulique, de préférence du type sans balai (donc aussi sans maintenance), commandé et alimenté en courant à partir d'une unité externe de commande électronique (non représenté) assure l'entraînement du barillet 22. A cet effet, ce barillet est serti à sa périphérie d'aimants permanents ou d'une cage d'écureuil (dans le cas d'un moteur asynchrone) 42 de façon à former le rotor du moteur électrique, le stator bobiné 44 étant classiquement disposé autour du rotor avec un entrefer annulaire entre eux. Ainsi formé, l'ensemble moteur/pompe constitue une électropompe intégrée présentant un gain en masse et en encombrement par rapport à une configuration plus classique en deux éléments distincts (à l'exemple de la figure 1). Comme il est connu, l'unité externe de commande électronique assure la gestion de la puissance électrique (alimentation en courant) et des signaux électroniques de commande du moteur électrique (vitesse et sens de rotation).

Un accumulateur hydraulique 50 bien connu dans le domaine de l'art, est monté sous le corps de l'électropompe intégrée, fixée sous le couvercle de séparation 30, pour compenser les variations de volume du fluide hydraulique dues à sa compressibilité ou sa dilatation (par exemple du fait de la température ou de fuites éventuelles). Cet accumulateur est constitué d'un soufflet métallique 52 assisté, dans l'exemple illustré, par un ressort 54 qui prend appui sur le fond du boîtier de l'accumulateur 56 de façon à maintenir la pression, mais une assistance par un gaz sous pression est aussi envisageable.

L'introduction du fluide dans l'actionneur, comme la purge du vérin, est effectué une fois pour toute en atelier lors de son assemblage par un bouchon ou une soupape 58 de remplissage pratique à utiliser, située de préférence au niveau du carter 36 de la pompe. Le fluide hydraulique de l'accumulateur pénètre dans le corps de pompe par des orifices d'admission 60.

Dans le cas d'une mise en rotation de l'actionneur, le couvercle de séparation 30 comporte une masse d'équilibrage 62 qui s'oppose au balourd provoqué par le plateau biais 28. On peut aussi percer dans ce couvercle, sous le plateau biais, des trous borgnes d'équilibrage (non représentés). Des joints d'étanchéité annulaires 64a, 64b, 66 sont avantageusement disposés respectivement au niveau du carter de la pompe et du boîtier de l'accumulateur.

Un deuxième mode de réalisation de l'invention dans lequel l'accumulateur hydraulique 50 est intégré directement dans le corps du vérin 10 est illustré à la figure 4. Les éléments communs au mode de réalisation précédent portent les mêmes références.

Dans ce mode de réalisation, le plateau biais 28 est maintenant directement fixé sur le fond d'un couvercle étanche 70. L'accumulateur 50 est aussi constitué d'un soufflet annulaire métallique 72 assisté par un ressort 74 qui prend cette fois appui au fond d'une gorge annulaire interne 76 pratiquée dans le corps de vérin et d'axe commun S.

Cette solution présente l'avantage de ne pas avoir à démonter l'accumulateur pour changer l'électropompe et elle ne possède que deux joints annulaires d'étanchéité 78a, 78b. Le couvercle 70 peut être comme précédemment équipé d'une masse d'équilibrage de forme identique au plateau biais, pour compenser le balourd provoqué par celui-ci, dans le cas d'une utilisation particulière avec mise en rotation de l'actionneur électrohydraulique.

Le fonctionnement de l'actionneur électrohydraulique selon l'invention est semblable dans chacun des modes de réalisation décrits précédemment et se présente comme suit.

De façon connue, lorsque le moteur électrique 40 tourne (son stator est alors excité), le barillet entraîne les pistons axiaux 24 qui glissent grâce aux pots d'appui 26 sur la face supérieure du plateau biais 28, de sorte que les pistons axiaux sont animés d'un mouvement alternatif de va-et-vient. Dans le sens qui correspond à l'aspiration, les pistons axiaux descendent vers le bas du plateau biais alors que dans le sens qui correspond au refoulement, ils montent repoussés par le plateau biais. La glace de distribution 34 et les canalisations 18 intégrés dans le corps du vérin assurent l'arrivée ou le retour du fluide hydraulique qui est mis en pression ou dépression sur chaque face du piston 12 en fonction du sens de rotation du moteur électrique. Le vérin se déplace lorsque la pompe délivre le fluide nécessaire sur une face du piston et l'aspire sur l'autre face. A régime de rotation élevé du moteur correspondant une vitesse de déplacement élevé de l'actionneur, le temps de fonctionnement assurant la longueur du déplacement. Un changement du sens de rotation du moteur électrique implique un changement du sens de déplacement de l'actionneur. Cette structure d'actionneur autonome axisymétrique, sans canalisations souples ou même rigides et sans raccords, est opérationnelle dans toutes les positions sans risque de désamorçage de la pompe, l'ensemble étant totalement étanche à l'air. En outre, le fluide hydraulique circulant en circuit fermé reste constamment sous pression du fait de l'accumulateur et il n'est pas nécessaire de procéder à des recharges régulières de fluide.

Le moteur immergé de l'électropompe intégrée permet d'éliminer les joints dynamiques de la solution pompe et moteur séparés tout en améliorant la fiabilité et la maintenance.

## Revendications

1. Actionneur électrohydraulique comportant :
- un vérin hydraulique (10) ayant un piston (12) solidaire d'un organe à commander et pouvant se déplacer dans un corps cylindrique (16) sous l'action d'un fluide hydraulique,
- une pompe hydraulique (20) alimentant en fluide hydraulique les deux faces dudit piston au travers de canaux (18),
- un moteur électrique (40) immergé dans le fluide hydraulique, commandé et alimenté en courant par une unité de commande électronique, et entraînant en rotation ladite pompe hydraulique,
**caractérisé en ce que** l'actionneur comporte
- un accumulateur hydraulique (50) destiné à compenser les variations de volume du fluide hydraulique, **en ce que** lesdits canaux sont intégrés dans ledit corps cylindrique du vérin, et
**en ce que** ledit vérin hydraulique, ladite pompe hydraulique, ledit moteur électrique et ledit accumulateur hydraulique ont un axe de symétrie commun (S) et sont montés en alignement dans un même boîtier étanche au fluide hydraulique, de façon à former un ensemble hydraulique autonome axisymétrique.

2. Actionneur selon la revendication 1, **caractérisé en ce que** ladite pompe hydraulique est une pompe hydraulique à barillet (22) comportant des pistons axiaux (26) et un plateau biais (28, 80).

3. Actionneur selon la revendication 2, **caractérisé en ce que** ledit barillet est mobile en rotation autour dudit axe de symétrie commun, ledit plateau biais étant fixe et solidaire dudit boîtier.

4. Actionneur selon la revendication 1, **caractérisé en ce que** ledit moteur électrique est du type sans balai, à aimants permanents ou asynchrone.

5. Actionneur selon la revendication 3, **caractérisé en ce que** ledit barillet de la pompe hydraulique est serti d'aimants permanents (42) ou d'une cage d'écureuil de façon à former un rotor du moteur électrique et à constituer avec un stator du moteur électrique une électropompe intégrée.

6. Actionneur selon la revendication 1, **caractérisé en ce que** ledit accumulateur hydraulique est intégré axialement dans le corps du vérin.

7. Actionneur selon la revendication 1, **caractérisé en ce que** ledit accumulateur hydraulique est disposé axialement sous ledit corps de pompe.

8. Actionneur selon la revendication 1, **caractérisé en ce qu'**il comporte en outre des moyens d'équilibrage (62) pour supprimer le balourd créé par le plateau biais_lors de sa mise en rotation.

## Claims

1. An electrohydraulic actuator comprising:
- a hydraulic jack (10) comprising a piston (12) secured to a member to be controlled and capable of moving in a cylinder (16) under drive from a hydraulic fluid;
- a hydraulic pump (20) feeding both faces of said piston with hydraulic fluid via channels (18);
- an electric motor (40) immersed in the hydraulic fluid, and controlled and powered electrically by an electronic control unit, driving said hydraulic pump in rotation;
- the electrohydraulic actuator being **characterised in that** it comprises a hydraulic accumulator (50) for compensating variations in the volume of the hydraulic fluid, **in that** said channels are integrated in the walls of said cylinder of the actuator; and
**in that** said hydraulic jack, said hydraulic pump, said electric motor, and said hydraulic accumulator have a common axis of symmetry (S) and are mounted in alignment in a common housing that is leaktight to the hydraulic fluid, thereby forming an axially symmetrical self-contained hydraulic assembly.

2. An actuator according to claim 1, **characterised in that** said hydraulic pump is a swash-plate pump comprising a cylinder system (22) containing axial pistons (26) and a swash-plate (28, 80).

3. An actuator according to claim 2, **characterised in that** said cylinder system is mounted to rotate about said common axis of symmetry, said swash-plate being stationary and secured to said housing.

4. An actuator according to claim 1, **characterised in that** said electric motor is of the brushless type, having permanent magnets or being asynchronous.

5. An actuator according to claim 3, **characterised in that** said cylinder system of the hydraulic pump is secured to permanent magnets (42) or to a squirrel cage so as to form an electric motor rotor and so as to cooperate with an electric motor stator to form an integrated electrical pump.

6. An actuator according to claim 1, **characterised in that** said hydraulic accumulator is axially integrated in the cylinder of the actuator.

7. An actuator according to claim 1, **characterised in that** said hydraulic accumulator is disposed axially beyond said pump body.

8. An actuator according to claim 1, **characterised in that** it further comprises balance means (62) for eliminating the unbalance caused by the swash-plate when the actuator is set into rotation.

## Patentansprüche

1. Elektrohydraulischer Aktuator mit:
- einem Hydraulikzylinder (10) der einen Kolben (12) aufweist, welcher mit einem zu steuernden Organ fest verbunden ist und sich unter der Wirkung eines Hydraulikfluids in einem zylindrischen Körper (16) bewegen kann,
- einer Hydraulikpumpe (20), welche die zwei Flächen des Kolbens über Kanäle (18) mit Hydraulikfluid beaufschlagt,
- einem Elektromotor (40), der in das Hydraulikfluid eingetaucht ist. über eine elektronische Steuereinheit gesteuert und mit Strom versorgt wird und die Hydraulikpumpe drehantreibt,
**dadurch gekennzeichnet, daß** der Aktuator eignen Hydraulikspeicher (50) umfaßt, welcher dazu bestimmt ist, die Volumenschwankungen des Hydraulikfluids auszugleichen, daß die Kanäle in den zylinderischen Körper des Zylinders integriert sind und daß der Hydraulikzylinder, die Hydraulikpumpe, der Elektromotor und der Hydraulikspeicher eine gemeinsame Symmetrieachse (S) haben und fluchtend in einem gleichen hydraulikfluiddichten Gehäuse anbeordnet sind, so daß sie eine selbständige axialsymmetrische Hydraulikanordnung bilden.

2. Aktuator nach Anspruch 1, **dadurch gekennzeichnet, daß** die Hydraulikpumpe eine Hydraulikpumpe mit Kolbentrommel (22) ist, die Axialkolben (26) und eine Schrägscheibe (28, 80) umfaßt.

3. Aktuator nach Anspruch 2, **dadurch gekennzeichnet, daß** die Trommel um die gemeinsame Symmetrieachse drehbeweglich ist, wobei die Schrägscheibe fest und mit dem Gehäuse fest verbunden ist.

4. Aktuator nach Anspruch 1, **dadurch gekennzeichnet, daß** der Elektromotor von der Art ohne Bürste, mit Permanentmagneten oder Asynchronmotor ist.

5. Aktuator nach Anspruch 3, **dadurch gekennzeichnet, daß** die Trommel der Hydraulikpumpe von Elektromagneten (42) oder einer Käfigwicklung umgeben ist, so daß sie einen Rotor des Elektromotors bildet und daß sie mit einem Stator des Elektromotors eine integrierte Elektropumpe bildet,

6. Aktuator nach Anspruch 1, **dadurch gekennzeichnet, daß** der Hydraulikspeicher in den Körper des Zylinders axial integriert ist.

7. Aktuator nach Anspruch 1, **dadurch gekennzeichnet, daß** der Hydraulikspeicher unter dem Pumpenkörper axial angeordnet ist.

8. Aktuator nach Anspruch 1, **dadurch gekennzeichnet, daß** er ferner Ausgleichsmittel (62) umfaßt, um die Unwucht aufzuheben, die durch die Schrägscheibe erzeugt wird, wenn er in Drehung versetzt wird.
